# EUROPÄISCHE PATENTANMELDUNG

(11) **EP 1 710 067 A1**
(43) Veröffentlichungstag der Anmeldung: **11.10.2006**
(21) Anmeldenummer: 05007690.0
(22) Anmeldetag: 08.04.2005
(51) Int. Cl.: B29C 33/30, A45D 40/16, B29C 33/00

(54) **Auswechselbare Formeinheit**

(71) Anmelder: Weckerle GmbH, 82362 Weilheim (DE)
(72) Erfinder: Gilg, Franz Xaver, 82398 Polling (DE)
(74) Vertreter: Hohgardt, Martin

(57) **Zusammenfassung**

Formvorrichtung zum Formen von Massen, insbesondere zum Formen von Lippenstifminen, wobei die Formvorrichtung mehrere Formen aufweist in die die zu formende Masse gegossen wird, wobei die Formvorrichtung mehrere Einheiten (1) aufweist, in denen jeweils mehrere Formen angeordnet sind und Mittel aufweist, um diese Einheiten (1) jeweils auswechselbar an der Formvorrichtung zu befestigen, sowie eine entsprechende Formeinheit und ein entsprechendes Verfahren zum Formen von Massen mit einer entsprechenden Formvorrichtung.

## Beschreibung

Die vorliegende Erfindung betrifft eine Einheit für mehrere Formen, eine Formvorrichtung zum Formen von Massen mit mehreren derartigen Einheiten für mehrere Formen, sowie ein Verfahren zum Auswechseln der Formen in einer Formvorrichtung mit Hilfe der Einheiten für mehrere Formen.

In einer Fonnvorrichtung zum Formen von Massen, beispielsweise zu Lippenstiftminen, wird die zu formende Masse mit Hilfe einer Befüllstation im heißen und flüssigen Zustand in einzelne Formen gefüllt. Die eingefüllte Masse wird dann mit Hilfe einer Kühlstation in den Formen abgekühlt und nach dem Abkühlvorgang mit Hilfe einer Entformstation im festen Zustand aus den Formen entnommen.

Eine derartige Formvorrichtung weist normalerweise eine Vielzahl von Formen auf, die beispielsweise kreisförmig an Rand eines Gießkranzes angeordnet sind. Wenn andere Produkte, beispielsweise Lippenstiftminen mit anderen Abmessungen hergestellt werden sollen, müssen diese Formen ausgewechselt werden. Des weiteren kann es notwendig sein die Formen auszuwechseln, wenn für das andere Produkt ein anderer Entformmechanismus verwendet werden soll. Dies kann beispielsweise der Fall sein, wenn eine andere Masse mit anderen Eigenschaften verwendet werden soll.

Das Auswechseln der Formen ist allerdings sehr zeitintensiv und führt zu langen Stillstandzeiten der Formvorrichtung.

Eine Aufgabe der vorliegenden Erfindung ist es daher, eine Formvorrichtung bereitzustellen, mit der die Stillstandzeit beim Wechseln der Formen wesentlich verringert werden kann.

Erfindungsgemäß wird diese Aufgabe durch eine Formvorrichtung zum Formen von Massen gemäß Anspruch 1, durch eine Einheit zur Verwendung in einer Formvorrichtung gemäß Anspruch 7 und durch ein entsprechendes Verfahren zum Wechseln von Formen in einer Formvorrichtung gelöst.

Die Formvorrichtung zum Formen von Massen, insbesondere zum Formen von Lippenstiftminen, weist hierfür mehrere Formen auf in die die zu formende Masse gegossen wird. Außerdem weist die Formvorrichtung mehrere Einheiten auf, in denen jeweils mehrere Formen angeordnet sind. Erfindungsgemäß weist die Formvorrichtung auch Mittel auf, um diese Einheiten jeweils auswechselbar an der Formvorrichtung zu befestigen.

Mit Hilfe der erfindungsgemäßen Formvorrichtung ist es möglich, die Stillstandzeit einer Formvorrichtung beim Wechseln von den bisher verwendeten Formen (alte Formen) zu den nun zu verwendenden Formen (neue Formen) wesentlich zu verringern. Während bei den im Stand der Technik bekannten Formvorrichtungen ein Auswechseln der Formen nur durchgeführt werden konnte, wenn die Formvonichtung nicht in Betrieb war, kann bei der erfindungsgemäßen Fonnvonichtung parallel zum Betrieb der Formenwechsel vorbereitet werden. Hierzu können in einem Vorbereitungsschritt die neuen Formen schon einmal in entsprechenden Einheiten angeordnet werden. Sobald der Formprozess mit den alten Formen dann abgeschlossen ist, müssen nur noch die an der Formvorrichtung befestigten Einheiten mit den alten Formen gegen die vorbereiteten Einheiten mit den neuen Formen ausgewechselt werden. Hierfür weisen die Einheiten und die Formvorrichtung vorzugsweise entsprechende Mittel auf, so dass der Auswechselvorgang möglichst schnell, präzise und einfach durchgeführt werden kann.

Erfindungsgemäß sind in jeder Einheit mehrere Formen angeordnet werden. Bevorzugt ist eine Anordnung von mindestens zehn Formen in einer Einheit. Je nach der Größe der einzelnen Formen können aber auch wesentlich mehr Formen in einer Einheit angeordnet werden. Dadurch kann die Anzahl der Auswechselvorgänge beim Wechsel der Formen mindestens um das zehnfache reduziert werden.

Bei der Formvorrichtung ist es auch wichtig, dass die Formen genau in die Formvorrichtung eingesetzt werden. Nur dadurch kann sicher gestellt werden, dass der Befüllungsvorgang und der Entformungsvorgang wie gewünscht ablaufen und ein unbeschädigtes Objekt ermöglichen. Mit Hilfe der erfindungsgemäßen Formvorrichtung muss das genaue Einpassen der Vielzahl an Formen allerdings nicht mehr unter dem Zeitdruck des Stillstands der gesamten Formvorrichtung durchgeführt werden. Erfindungsgemäß kann das gegebenenfalls komplizierte Einpassen der Formen während dem Betrieb der Formvorrichtung durchgeführt werden, da die Formen nicht in die Formvorrichtung selber, sondern in die Einheit eingesetzt werden. Alternativ können die Formen allerdings auch fest in der Einheit angeordnet sein.

Die Einheiten und die Formvorrichtung weisen vorzugsweise jeweils Mittel auf mit denen die Einheiten von der Formvorrichtung möglichst schnell und einfach gelöst werden können. Diese Mittel sollen darüber hinaus auch ein möglichst schnelles, einfaches, festes und präzises Befestigen der Einheiten an der Formvorrichtung ermöglichen. Gemäß einer ersten bevorzugten Ausführungsform werden hierfür Schrauben verwendet. In einer alternativen zweiten Ausführungsform werden die Einheiten mit Hilfe von einem Steckmechanismus an der Formvorrichtung lösbar befestigt.

In einer weiteren bevorzugten Ausführungsform weist die Einheit eine Kammer für den Durchfluss beispielsweise einer Kühlflüssigkeit auf. Dabei ist die Kammer vorzugsweise derart angeordnet, dass die Kühlflüssigkeit die in der Einheit angeordneten Formen möglichst direkt umspült und somit die in den Formen angeordneten Massen kühlt, Um diesen Durchfluss der Kühlflüssigkeit zu ermöglichen weist die Einheit vorzugsweise Öffnungen für den Zufluss und den Abfluss der Kühlflüssigkeit auf. Die Formvorrichtung selber weist hierfür vorzugsweise korrespondierende Öffnungen aus, über die die Kühlflüssigkeit der Kammer der Einheit zugeführt wird oder wieder aus der Kammer entnommen wird.

In einer weiteren bevorzugten Ausführungsform weisen zumindest Teile der Einheiten eine geringe Wärmeleitfähigkeit auf. Somit kann beispielsweise verhindert werden, dass die Kühlflüssigkeit Kammern von benachbarten Einheiten beeinflusst. Dies kann beispielsweise besonders wichtig sein, wenn die Formen mit Hilfe einer warmen Flüssigkeit für das Befüllen vorgewärmt werden. Durch die Verwendung eines isolierenden Materials kann somit ein Erwärmen der Kühlflüssigkeit in der benachbarten Einheit verhindert werden. Außerdem können derartige Kammern die Massen in den Formen effektiver kühlen. Vorzugsweise wird die Einheit deshalb aus Kunststoff hergestellt.

Erfindungsgemäß wird die Aufgabe auch durch eine Einheit zur Verwendung in einer Formvorrichtung zum Formen von Massen mit Hilfe von Formen gelöst. Eine derartige Formvorrichtung wird beispielsweise für die Herstellung von Lippenstiftminen verwendet. Diese Einheit weist mehrere Öffnungen zur Aufnahme von Formen auf. Dabei können die Formen lösbar oder fest in diesen Öffnungen angeordnet sein. Außerdem weist die Einheit Mittel auf, um die Einheit auswechselbar an der Formvorrichtung zu befestigen. Beispiele für derartige Mittel sind eine Schraube, ein Steckmechanismus oder entsprechende Öffnungen um mit Hilfe einer Schraube oder einem Steckmechanismus befestigt zu werden.

Die Einheit weist gemäß einer bevorzugten Ausführungsform auch eine Kammer insbesondere für den Durchfluss einer Kühlflüssigkeit auf. Mit dieser Kühlflüssigkeit können beispielsweise die Massen in den Formen gekühlt werden. Alternativ kann aber auch eine warme Flüssigkeit zum Erwärmen der Formen durch die Kammer fließen. Die Kammer weist hierfür mindestens zwei Öffnungen für den Zufluss und den Abfluss einer entsprechenden Flüssigkeit auf. Die Öffnungen können dabei derart angeordnet sein, dass die Flüssigkeit von der Formvorrichtung geliefert wird und an diese auch wieder abgegeben wird. Alternativ kann mindestens eine der Öffnungen die Flüssigkeit entweder an eine andere Einheit angeben und/oder die Flüssigkeit von dieser anderen Einheit empfangen.

Bei dem erfindungsgemäßen Verfahren zum Wechseln von Formen in einer Formvorrichtung werden in einem ersten Schritt die an der Formvorrichtung befestigten Einheiten mit ersten Formen gelöst und in einem zweiten Schritt Einheiten mit zweiten Formen an der Formvorrichtung befestigt. Die Befestigung der Einheiten an der Formvorrichtung kann mit verschiedenen Befestigungsmechanismen durchgeführt werden. Beispiele hierfür sind Schrauben oder ein Steckmechanismus.

Im Folgenden wird ein Ausführungsbeispiel der Erfindung anhand der beigefügten Zeichnungen erläutert, in denen
- Figur 1: eine Ausführungsform der erfindungsgemäßen Einheit für mehrere Formen zeigt und
- Figur 2: einen Gießkranz zeigt, wie er beispielsweise bei einer Formvorrichtung verwendet wird, an dem eine Einheit für mehrere Formen befestigt ist.

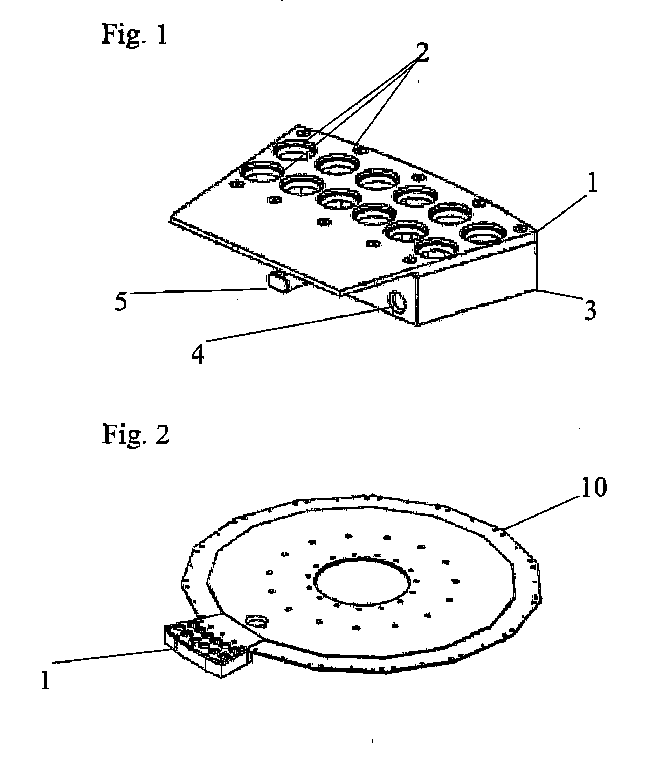

Figur 1 zeigt beispielhaft eine Ausführungsform der erfindungsgemäßen Einheit 1. Diese Einheit 1 weist an ihrer Oberseite mehrere Öffnungen 2 zur Aufnahme von Formen auf. Unterhalb dieser Oberseite ist eine Kammer 3 angeordnet. Die Kammer 3 ist derart ausgestaltet, dass die durch die Öffnungen 2 einsetzbaren Formen vollständig in der Kammer 3 angeordnet werden können. Die Kammer 3 wird beispielsweise verwendet, um die Masse in den Formen der Einheit 1 mit Hilfe einer Kühlflüssigkeit abzukühlen. Zu diesem Zweck weist die Kammer 3 Öffnungen 4, 5 für den Zufluss und den Abfluss der Kühlflüssigkeit in die Kammer 3 auf. In der vorliegenden Ausführungsform wird zumindest die Kammer 3 aus einem Material mit geringer Wärmeleitfähigkeit hergestellt.

Figur 2 zeigt einen Gießkranz 10, wie er beispielsweise im Zusammenhang mit der erfindungsgemäßen Formvorrichtung verwendet werden kann. Der Gießkranz 10 und die erfindungsgemäßen Einheiten 1 weisen jeweils Mittel auf, um die Einheiten möglichst schnell, einfach, fest und präzise an dem Gießkranz befestigen zu können.

Somit kann mit dem erfindungsgemäßen Gegenstand die Stillstandzeit beim Wechseln der Formen wesentlich verringert werden kann.

## Patentansprüche

1. Formvorrichtung zum Formen von Massen, insbesondere zum Formen von Lippenstiftminen, wobei die Formvorrichtung mehrere Formen aufweist in die die zu formende Masse gegossen wird,
**dadurch gekennzeichnet, dass**
die Formvorrichtung mehrere Einheiten (1) aufweist, in denen jeweils mehrere Formen angeordnet sind und
Mittel aufweist, um diese Einheiten (1) jeweils auswechselbar an der Formvorrichtung zu befestigen.

2. Formvorrichtung gemäß Anspruch 1, **dadurch gekennzeichnet, dass** die Einheiten (1) mit Hilfe von Schrauben an der Formvorrichtung befestigt werden.

3. Formvorrichtung gemäß Anspruch 1, **dadurch gekennzeichnet, dass** die Einheiten (1) mit Hilfe von einem Steckmechanismus an der Formvorrichtung befestigt werden.

4. Formvorrichtung gemäß einem der Ansprüche 1 bis 3, **dadurch gekennzeichnet, dass** jede Einheit (1) mindestens eine Kammer (3) für den Durchfluss einer Kühlflüssigkeit zum Kühlen der Massen in den Formen aufweist und diese Kammer jeweils Öffnungen (4, 5) für den Zufluss und den Abfluss der Kühlflüssigkeit aufweist.

5. Formvorrichtung gemäß einem der Ansprüche 1 bis 4, **dadurch gekennzeichnet, dass** die Einheiten (1) aus einem Material mit einer geringen Wärmeleitfähigkeit hergestellt sind.

6. Formvorrichtung gemäß Anspruch 5, **dadurch gekennzeichnet, dass** die Einheiten (1) aus Kunststoffhergestellt sind.

7. Einheit (1) zur Verwendung in einer Formvorrichtung zum Formen von Massen mit Hilfe von Formen, insbesondere zum Formen von Lippenstiftminen, wobei die Einheit (1) mehrere Öffnungen (2) zur Aufnahme der Formen aufweist und die Einheit (1) Mittel aufweist, um auswechselbar an der Formvorrichtung befestigt zu werden.

8. Einheit (1) gemäß Anspruch 7, **dadurch gekennzeichnet, dass** die Einheit (1) mit Hilfe von Schrauben an der Formvorrichtung befestigt wird.

9. Einheit (1) gemäß Anspruch 7, **dadurch gekennzeichnet, dass** die Einheit (1) mit Hilfe von einem Steckmechanismus an der Formvorrichtung befestigt wird.

10. Einheit (1) gemäß einem der Ansprtiche 7 bis 9, **dadurch gekennzeichnet, dass** die Einheit (1) mindestens eine Kammer (3) für den Durchfluss einer Kühlflüssigkeit zum Kühlen der Massen in den Formen aufweist und diese Kammer jeweils Öffauagen (4, 5) für den Zufluss und den Abfluss der Kühlflüssigkeit aufweist.

11. Einheit (1) gemäß einem der Ansprüche 7 bis 10, **dadurch gekennzeichnet, dass** die Einheit (1) aus einem Material mit einer geringen Wärmeleitfähigkeit hergestellt ist.

12. Einheit (1) gemäß Anspruch 11, **dadurch gekennzeichnet, dass** die Einheit (1) aus Kunststoff hergestellt ist.

13. Verfahren zum Wechseln von Formen in einer Formvorrichtung, wobei das Verfahren die folgenden Schritte aufweist:
- Lösen der an der Formvorrichtung befestigten Einheiten (1) mit ersten Formen von der Formvorrichtung und
- Befestigen von Einheiten (1) mit zweiten Formen an der Formvorrichtung.

14. Verfahren zum Wechseln von Formen gemäß Anspruch 13, **dadurch gekennzeichnet, dass** das Lösen und Befestigen mit Hilfe von Schrauben durchgeführt wird.

15. Verfahren zum Wechseln von Formen gemäß Anspruch 13, **dadurch gekennzeichnet, dass** das Lösen und Befestigen mit Hilfe von einem Steekmechanismus durchgeführt wird.
